# EUROPEAN PATENT APPLICATION

(11) **EP 4 474 979 A1**
(43) Date of publication of application: **11.12.2024**
(21) Application number: 24180212.3
(22) Date of filing: 05.06.2024
(51) Int. Cl.: G06F 8/41

(54) **METHOD AND DEVICE WITH ITERATIVE COMPILATION FOR DEEP LEARNING**

(30) Priority: 08.06.2023 KR 20230073587; 31.08.2023 KR 20230115322
(71) Applicant: Samsung Electronics Co., Ltd., Suwon-si, Gyeonggi-do 16677 (KR)
(72) Inventor: Lee, Gyeongmin, 16678 Suwon-si, Gyeonggi-do (KR); Kim, Bongjun, 16678 Suwon-si, Gyeonggi-do (KR); Jung, Hanwoong, 16678 Suwon-si, Gyeonggi-do (KR)
(74) Representative: Grünecker Patent- und Rechtsanwälte PartG mbB

(57) **Abstract**

An electronic device includes a deep learning compiler configured to receive a hardware representation corresponding to a target system comprising a hierarchical structure, extract a plurality of hierarchies from the target system based on the received hardware representation, and perform iterative compilation on the plurality of extracted hierarchies.

## Description

### BACKGROUND

### 1. Field

The following description relates to a method and device with iterative compilation for deep learning.

### 2. Description of Related Art

A deep learning model may include a convolution neural network (CNN), a transformer model, a graph neural network (GNN) model, and the like. The hardware may include a graphics processing unit (GPU), a neural processing unit (NPU), and a process-in-memory (PIM). The system may include a mobile device, a vehicle, a data center, and a supercomputer. The deep learning model or hardware may be optimized based on a hint, a user, or a heuristic algorithm. Optimization of the deep learning model or hardware may be automatically performed through a compiler.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is claimed in the independent claims. Preferred embodiments are specified in the dependent claims.

In one or more general aspects, an electronic device includes: a deep learning compiler configured to: receive a hardware representation corresponding to a target system comprising a hierarchical structure; extract a plurality of hierarchies from the target system based on the received hardware representation; and perform iterative compilation on the plurality of extracted hierarchies.

For the performing of the iterative compilation, the deep learning compiler may be configured to sequentially apply a pass pipeline indicating a sequence of passes to each of the plurality of extracted hierarchies from an upper hierarchy to a lower hierarchy.

For the performing of iterative compilation, the deep learning compiler may be configured to perform graph-level optimization, partitioning optimization, scheduling optimization, memory optimization, and communication optimization on each of the plurality of extracted hierarchies by applying the pass pipeline to the plurality of extracted hierarchies.

The pass pipeline may include a pass of graph-level optimization, a pass of partitioning optimization, a pass of computation scheduling optimization, a pass of memory or communication instrumentation, and a pass of memory or communication scheduling optimization.

Each of the plurality of passes constituting the pass pipeline may be configured to be applicable to hierarchies of a plurality of systems, including the target system, without being dependent on an individual system of the plurality of systems.

For the performing of the iterative compilation, the deep learning compiler may be configured to perform optimization on the plurality of extracted hierarchies using a graph dialect, a schedule dialect, a data movement dialect, a memory dialect, and a communication dialect.

For the performing of the iterative compilation, the deep learning compiler may be configured to: compute a count of hierarchies constituting the target system from the received hardware representation; and iteratively apply a pass pipeline to the plurality of extracted hierarchies by the computed count of hierarchies.

The electronic device may include one or more processors comprising the deep learning compiler.

In one or more general aspects, a processor-implemented method includes: receiving a hardware representation corresponding to a target system comprising a hierarchical structure; extracting a plurality of hierarchies from the target system based on the received hardware representation; and performing iterative compilation on the plurality of extracted hierarchies.

The performing of the iterative compilation may include sequentially applying a pass pipeline indicating a sequence of passes to each of the plurality of extracted hierarchies from an upper hierarchy to a lower hierarchy.

The performing of iterative compilation may include performing graph-level optimization, partitioning optimization, scheduling optimization, memory optimization, and communication optimization on each of the plurality of extracted hierarchies by applying the pass pipeline to the plurality of extracted hierarchies.

The pass pipeline may include a pass of graph-level optimization, a pass of partitioning optimization, a pass of computation scheduling optimization, a pass of memory or communication instrumentation, and a pass of memory or communication scheduling optimization.

Each of the plurality of passes constituting the pass pipeline may be configured to be applicable to hierarchies of a plurality of systems, including the target system, without being dependent on an individual system of the plurality of systems.

The performing of the iterative compilation may include performing optimization on the plurality of extracted hierarchies using a graph dialect, a schedule dialect, a data movement dialect, a memory dialect, and a communication dialect.

The performing of the iterative compilation may include: computing a count of hierarchies constituting the target system from the received hardware representation; and iteratively applying a pass pipeline to the plurality of extracted hierarchies by the computed count of hierarchies.

In one or more general aspects, a non-transitory computer-readable storage medium stores instructions that, when executed by a processor, configure the processor to perform any one, any combination, or all of operations and/or methods described herein.

In one or more general aspects, an electronic device includes: one or more processors configured to: receive a hardware representation corresponding to a target system comprising a hierarchical structure; extract a plurality of hierarchies from the target system based on the received hardware representation; and perform iterative compilation on the plurality of extracted hierarchies by applying a same pass pipeline to each of the plurality of hierarchies.

The plurality of extracted hierarchies may include: an upper hierarchy comprising a plurality of nodes of the target system; and a lower hierarchy comprising components of a node of the plurality of nodes.

For the performing of the iterative compilation, the one or more processors may be configured to: apply the same pass pipeline to the upper hierarchy by mapping information onto the node, without using information of an internal configuration of the node; and apply the same pass pipeline to the lower hierarchy by mapping the information mapped onto the node onto the components of the node, based on the information of the internal configuration of the node.

The information mapped onto the node may include an operation mapped onto the node and data of a deep learning model mapped onto the node.

Other features and aspects will be apparent from the following detailed description, the drawings, and the claims.

### BRIEF DESCRIPTION OF THE DRAWINGS

FIG. 1 is a flowchart briefly illustrating a process of a deep learning compiler to perform compilation on a target system according to one or more embodiments.
FIG. 2 illustrates an example of an overall configuration of a framework of a universal deep learning compiler (UDLC) according to one or more embodiments.
FIG. 3 illustrates an example of a compile process of a deep learning compiler according to one or more embodiments.
FIG. 4 illustrates an example of pseudocode of a pass that determines data placement in a memory hierarchy according to one or more embodiments.
FIG. 5 illustrates an example of operations of a deep learning runtime and a deep learning compiler according to one or more embodiments.
FIG. 6 illustrates a table showing an example of a pass configuring a deep learning optimization field according to one or more embodiments.
FIG. 7 illustrates an example of a process of a deep learning compiler to perform iterative compilation on a target system according to one or more embodiments.
FIG. 8 illustrates an electronic device according to one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as "connected to," "coupled to," or "joined to" another component or element, it may be directly (e.g., in contact with the other component or element) "connected to," "coupled to," or "joined to" the other component or element, or there may reasonably be one or more other components or elements intervening therebetween. When a component or element is described as "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof. The use of the term "may" herein with respect to an example or embodiment (for example, as to what an example or embodiment may include or implement) means that at least one example or embodiment exists where such a feature is included or implemented, while all examples are not limited thereto.

The phrases "at least one of A, B, and C," "at least one of A, B, or C," and the like are intended to have disjunctive meanings, and these phrases "at least one of A, B, and C," "at least one of A, B, or C," and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as will be commonly understood consistent with and after an understanding of the present disclosure. It will be further understood that terms, such as those defined in commonly-used dictionaries, should be interpreted as having a meaning that is consistent with their meaning in the context of the relevant art and the present disclosure, and will not be interpreted in an idealized or overly formal sense unless expressly so defined herein.

Hereinafter, examples will be described in detail with reference to the accompanying drawings. When describing the embodiments with reference to the accompanying drawings, like reference numerals refer to like elements and a repeated description related thereto will be omitted.

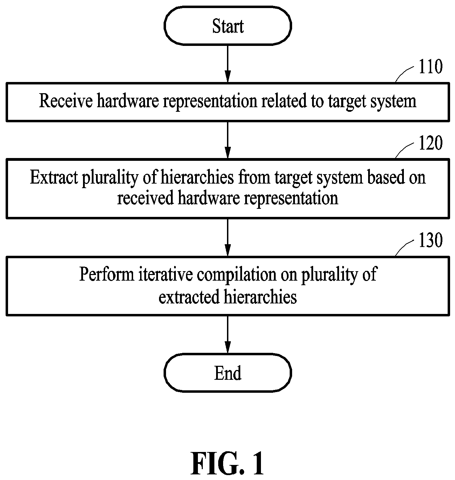

FIG. 1 is a flowchart briefly illustrating a process of a deep learning compiler to perform compilation on a target system according to one or more embodiments.

A conventional compiler is not able to support a system having various hierarchical structures with one compiler. This is because different hardware hierarchies constituting the system need to be optimized with different compiler code implemented by the conventional compiler. In contrast, an electronic device of one or more embodiments may perform a compile process on a system having various hierarchical structures through one deep learning compiler. A deep learning compiler of one or more embodiments may generate a common pass pipeline commonly applied to hardware hierarchies and may perform compilation and optimization on the entire system by applying the generated common pass pipeline to hardware hierarchies constituting the system. Hereinafter, a detailed description of examples of an operation of the deep learning compiler is provided.

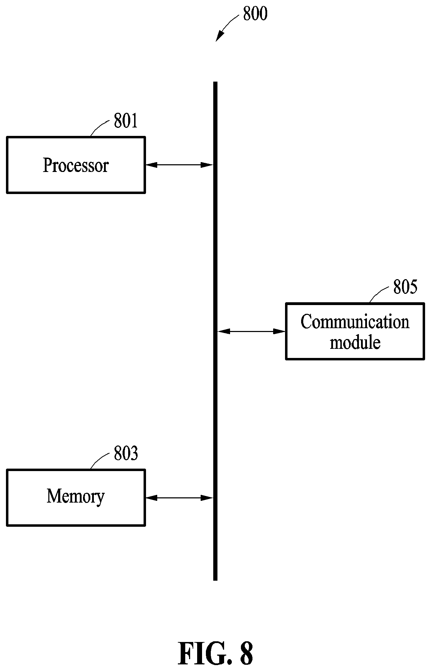

In operation 110, a deep learning compiler of an electronic device may receive hardware representation providing system-level information on a target system having a hierarchical structure. The hardware representation may represent a physical form or a construction manner of a component constituting hardware (e.g., a component of the electronic device 800 of FIG. 8). The deep learning compiler may recognize a hardware structure of the target system by reading the hardware representation.

In operation 120, the deep learning compiler may extract a plurality of hierarchies from the target system based on the received hardware representation. The plurality of hierarchies extracted from the target system may indicate a result of abstracting a hardware configuration of the target system at various levels.

In operation 130, the deep learning compiler may perform iterative compilation on the plurality of extracted hierarchies. In this case, that the deep learning compiler performs iterative compilation on the plurality of hierarchies may be or include applying the same pass pipeline to each of the plurality of hierarchies. The deep learning compiler may sequentially apply the same pass pipeline to each of the plurality of hierarchies from an upper hierarchy to a lower hierarchy.

For example, the deep learning compiler may extract, from the target system, a plurality of hierarchies including a first hierarchy that is an upper hierarchy and a second hierarchy that is a lower hierarchy. In this case, the deep learning compiler may perform iterative compilation by applying a pass pipeline to the first hierarchy, which is the upper hierarchy, and the second hierarchy, which is the lower hierarchy.

In one or more embodiments, the pass pipeline may be a sequence of passes. In the present disclosure, the pass may be a component of a deep learning compiler receiving code as an input and performing conversion, analysis, optimization, and the like on the received code.

A deep learning optimization field may be divided into five fields, which are a graph field, a partitioning field, a scheduling field, a memory field, and a communication field. The deep learning compiler may generate a pass pipeline including a pass corresponding to each optimization field. The deep learning compiler may perform graph-level optimization, partitioning optimization, scheduling optimization, memory optimization, and communication optimization by applying the generated pass pipeline to each of the plurality of hierarchies.

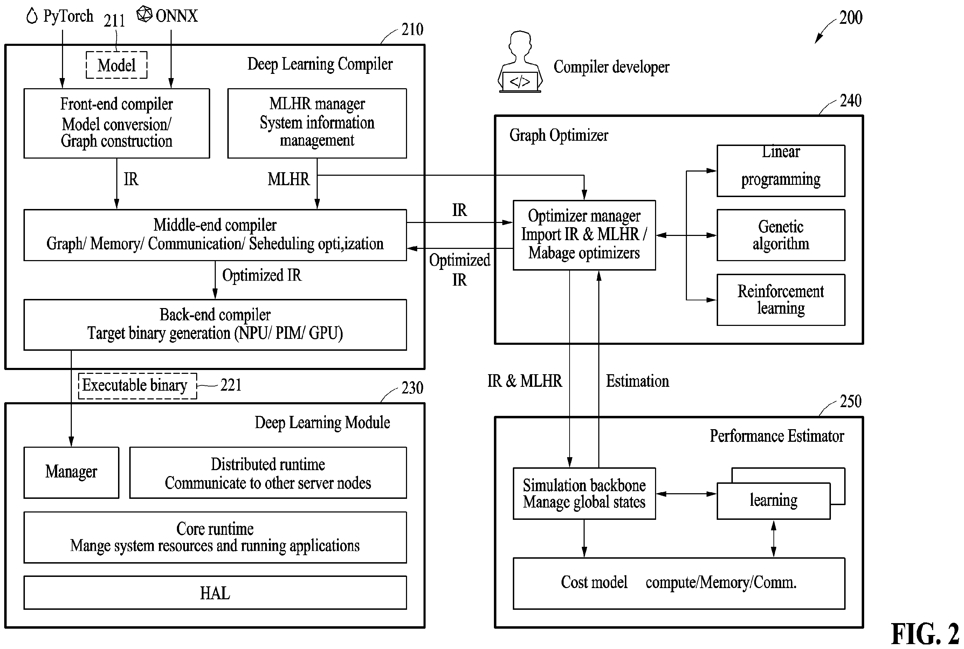

FIG. 2 illustrates an example of an overall configuration of a framework of a universal deep learning compiler (UDLC) according to one or more embodiments.

In one or more embodiments, a UDLC framework 200 may perform a compilation process on a target system in a wide range. To perform the compilation process through the UDLC framework 200, a hardware description encapsulating information on the target system may be used. For example, a hardware representation may provide a hierarchical composition of hardware elements of a target system, including computing, memory, and communication elements.

In one or more embodiments, the UDLC framework 200 may include a deep learning compiler 210, a deep learning runtime module 230, a graph optimizer 240, and a performance estimator 250.

In one or more embodiments, the deep learning compiler 210 of the UDLC framework 200 may receive hardware representation providing system-level information of the target system. In one or more embodiments, the deep learning compiler 210 may load hardware representation providing system-level information of the target system from a memory. In addition, the deep learning compiler 210 may receive a deep learning model 211 as an input. For example, the deep learning model 211 that the deep learning compiler 210 receives as an input may be represented by a Torch script or open neural network exchange (ONNX). The deep learning compiler 210 may adopt 4 dialects to perform iterative compilation that is able to manage the heterogeneity of the system and varying scales. The 4 dialects may be a graph dialect, a memory dialect, a communication dialect, and a schedule dialect.

In one or more embodiments, the graph dialect may be used to easily perform graph-level optimization including operations, such as fusion and fission of hierarchies, and execution ordering. The memory dialect may be used to focus on memory allocation and related optimization. The communication dialect may be used to process point-to-point and collective communications. The schedule dialect may be used to form a core of optimization establishing parallelization techniques and double buffering. These dialects and corresponding passes may be constructed to be applicable to all system hierarchies.

In one or more embodiments, the deep learning compiler 210 may optimize the deep learning model 211 mainly using internal heuristics and may allow integration of external optimization methodology. The deep learning compiler 210 may perform more aggressive optimization using linear programming, meta-heuristics, and deep learning approaches including reinforcement learning.

In one or more embodiments, to search a huge design space by the graph optimizer 240, fast performance evaluation may be performed. For this purpose, the performance estimator 250 for performing performance prediction on scheduled intermediate representations (IRs) for various pieces of hardware without an assumption on specific hardware may be used.

In one or more embodiments, the deep learning compiler 210 of the UDLC 200 may perform a compilation process and may generate a target executable binary 221 corresponding to the deep learning model 211 by performing the compilation process. The target executable binary 221 may be transmitted to the deep learning runtime module 230. The deep learning runtime module 230 may execute the target executable binary 221 received from the deep learning compiler 210. The deep learning runtime module 230 may have a configurable and scalable architecture to accommodate systems having various sizes from a mobile device to a large-scale server.

In one or more embodiments, components (e.g., the deep learning compiler 210 and the deep learning runtime module 230) provided in the UDLC 200 may be configured with a focus on the nature of highly reconfigurable hardware representation. By selecting the construction, the UDLC framework 200 of one or more embodiments may provide a flexible and efficient compilation process for various artificial intelligence (Al) accelerators and systems.

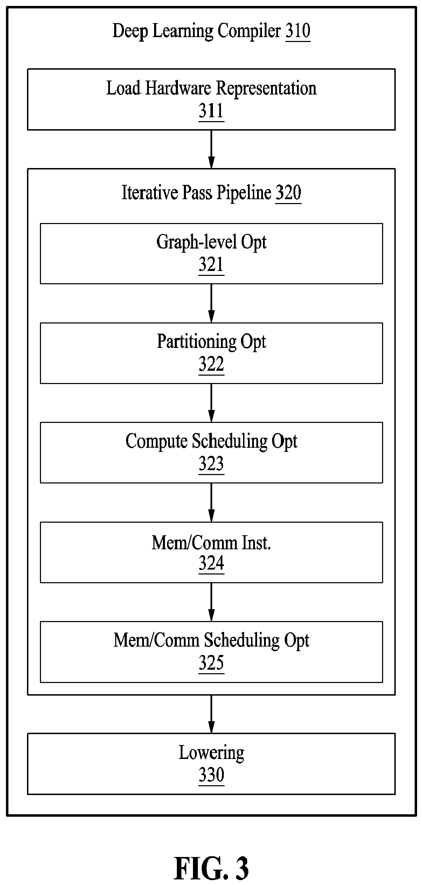

FIG. 3 illustrates an example of a compile process of a deep learning compiler according to one or more embodiments.

In one or more embodiments, a deep learning compiler 310 (e.g., the deep learning compiler210 of FIG. 2) may enable various optimizations to execute a deep neural network (DNN) model in various target systems (or devices).

### Deep Learning Compiler Configuration Principles

In one or more embodiments, three configuration principles may be established to configure the reusable deep learning compiler 310.

### 1) Definition of expressive IR:

In one or more embodiments, the deep learning compiler 310 may use IR to encompass information of a deep learning model that is input to the deep learning compiler 310 and an optimized execution plan for the deep learning model. As a result, the expressiveness of the IR may play a pivotal role in determining a scope of a deep learning compiler. When IR is not able to effectively represent a predetermined computation operation or a data type, the capability of the compiler may be limited, and thereby an ability to compile various deep learning models including a predetermined operation or a data type may be degraded. Furthermore, when an ability to represent predetermined scheduling optimization, such as an overlap between a computation operation and a communication operation, is insufficient, the compiler may not decrease the execution time using optimization. Accordingly, a configuration of expressive IR of the deep learning compiler 310 of one or more embodiments may enable wide optimization for various deep learning models.

### 2) Configuration of target-agnostic pass:

In one or more embodiments, in the deep learning compiler 310, a pass may function as a fundamental element that generates an analysis result or optimized code by receiving input code. However, because optimization related to a low-level hardware trait (such as a memory hierarchy, a specialized computation operation, and a communication bandwidth) is inherently tied to a specific hardware type, a problem may occur in a typical deep learning compiler in that the low-level hardware trait may not be reused across various target architectures. In contrast, by considering that such optimization is implemented as passes in the deep learning compiler 310 of one or more embodiments, the configuration of a target (e.g., a system or hardware)-agnostic pass may be considered to implement a compiler framework (e.g., the UDLC framework 200 of FIG. 2) that is reusable and universally applicable.

In one or more embodiments, each of the plurality of passes constituting a pass pipeline may be agnostic to a target (e.g., a system or hardware). An individual pass may not reflect a specific hardware type or a system structure and may be configured based on hardware abstraction information described in the hardware representation. For example, the pass may be configured based on abstract code, such as "if (deviceType == compute)", rather than code, such as "if (device == GPU)". As described above, by configuring a pass based on hardware abstraction information described in hardware representation, the pass of one or more embodiments may not depend on a specific hardware type or a system structure.

### 3) Various expanded system-aware compiler structures:

In one or more embodiments, the execution of deep learning models may include a wide range of systems having various scales. The systems may range from a mobile neural processing unit (NPU) processing a small DNN for object detection to a large graphics processing unit (GPU) cluster used to train a wide range of language models.

The deep learning compiler 310 of one or more embodiments may recognize various scales and adapt thereto to ensure compatibility across expanded systems. In other words, based on an expressive definition of IR, a system-aware compiler using the configuration of a target-agnostic pass may be generated. Through the configuration, the deep learning compiler 310 of one or more embodiments may effectively satisfy a specific requirement of systems in various scales.

### Dialect definition

A dialect may represent a concept including IR adjusted to a specific optimization scope, a type, an attribute, and a pass. Hereinafter, based on the dialect concept, concepts of 5 dialects, which are graph, schedule, data movement, memory, and communication, for promoting various optimizations for a wide range of DNN models are described.

In one or more embodiments, a graph dialect in the deep learning compiler 310 may include various computation operations used for a deep learning model including convolution, matrix multiplication (e.g., matmul), and a rectified linear unit (ReLU) together with tensor representation. Since the computation operations may be differently implemented in various target devices, only mathematical semantics of operations may be captured without detailed information on implementation. Other than a forward computation operation, the graph dialect may include gradient computation and a backward computation operation. The graph dialect may represent the execution of the deep learning model through a computation graph by providing a comprehensive collection of computation and tensor operations. Through the representation, the deep learning compiler 310 of one or more embodiments may apply high-level optimization, such as operator fusion.

In one or more embodiments, the schedule dialect in the deep learning compiler 310 may play an important role in the deep learning compiler 310 by capturing an optimized execution schedule of computation, memory, and communication operations across various devices and systems. The schedule dialect may include various operations representing sequential and parallel execution of operations, dependencies among operations, and synchronization mechanisms, such as a barrier. By using the performance of the schedule dialect, the deep learning compiler 310 of one or more embodiments may achieve optimal performance across various hardware platforms and systems and efficient use of resources by effectively managing and orchestrating the execution of operations.

In one or more embodiments, the data movement dialect in the deep learning compiler 310 may include memory and communication operations and may perform a temporal representation of all data movements occurring between devices. The data movement dialect may include various operations related to peer-to-peer (P2P) and collective data movement and may additionally optimized by being mapped onto a memory or communication operation based on a cost analysis.

In one or more embodiments, the memory dialect in the deep learning compiler 310 may represent various memory operations including memory allocation and deallocation, memory object copying, and memory object storage. Furthermore, the memory dialect may expand support beyond the management of a virtual memory object to include direct management of a physical memory, such as a scratchpad memory.

The communication dialect in the deep learning compiler 310 may include various P2P and collective communication operations for easily performing efficient communication between devices. In a final lowering operation 330, each communication operation may be mapped onto specific communication library functions, such as NCLL all reduce, for optimizing a communication process. By establishing the communication dialect, the deep learning compiler 310 of one or more embodiments may achieve a smooth establishment of a communication operation and may improve the scalability and performance of deep learning computation across distributed systems using dedicated communication libraries.

In one or more embodiments, the deep learning compiler 310 may perform optimization on a plurality of hierarchies of the target system using the graph dialect, the schedule dialect, the data movement dialect, the memory dialect, and the communication dialect.

Hereinafter, an example of a compilation process of the deep learning compiler 310 is described.

Firstly, in operation 311, the deep learning compiler 310 may load hardware representation providing system-level information on a target system. The deep learning compiler 310 may extract a plurality of hierarchies from the target system based on the loaded hardware representation.

In operation 320, the deep learning compiler 310 may apply iterative compilation to the plurality of extracted hierarchies.

Hereinafter, an example of a process of the deep learning compiler 310 to apply a pass pipeline to one hierarchy to perform a compilation process to the hierarchy is described. In one or more embodiments, the pass pipeline may include a first pass of graph-level optimization, a second pass of partitioning optimization, a third pass of computation scheduling optimization, a fourth pass of memory or communication instrumentation, and a fifth pass of memory or communication scheduling optimization. The deep learning compiler 310 may sequentially perform optimization in order of graph-level optimization, partitioning optimization, computation scheduling optimization, memory or communication instrumentation, and memory or communication scheduling optimization.

For example, in operation 321, the deep learning compiler 310 may perform graph-level optimization by applying the first pass to a corresponding hierarchy. In operation 322, the deep learning compiler 310 may perform partitioning optimization by applying the second pass to a corresponding hierarchy. In operation 323, the deep learning compiler 310 may perform computation scheduling optimization by applying the third pass to a corresponding hierarchy. In operation 324, the deep learning compiler 310 may perform memory or communication instrumentation by applying the fourth pass to a corresponding hierarchy. In operation 325, the deep learning compiler 310 may perform memory or communication scheduling optimization by applying the fifth pass to a corresponding hierarchy. In operation 330, the deep learning compiler 310 may perform lowering that converts high-level representation into a low-level representation.

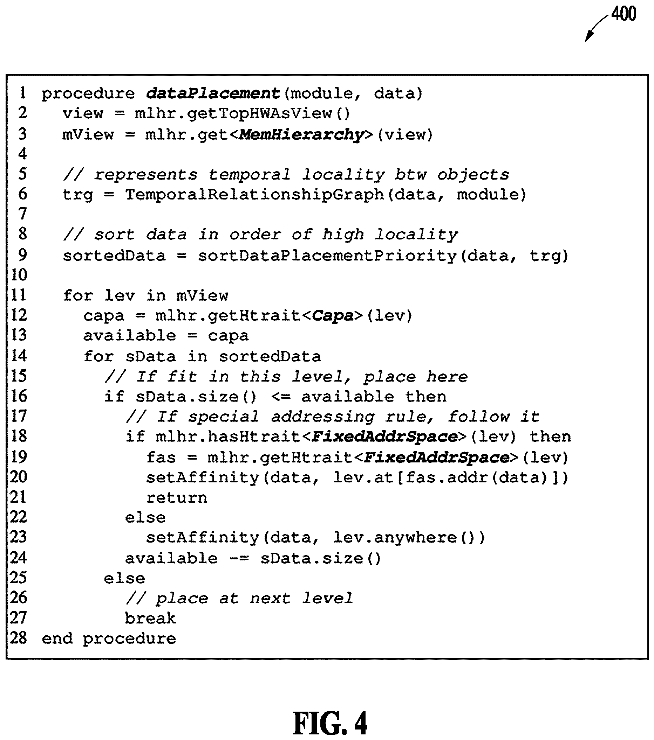

FIG. 4 illustrates an example of pseudocode of a pass that determines data placement in a memory hierarchy according to one or more embodiments.

To easily implement a reusable pass across various target systems, each pass in a deep learning compiler (e.g., the deep learning compiler210 of FIG. 2 and/or the deep learning compiler 310 of FIG. 3) may be developed using a hardware abstraction function of hardware representation.

In one or more embodiments, the pass may access a specific hardware function including a memory allocation strategy by memory hierarchy, memory capacity, and hardware using a view, a property, and a hardware trait of the hardware representation. The pass may be used for various scenarios, such as a 2-level memory hierarchy in which static random access memory (SRAM) and dynamic RAM (DRAM) are included in an NPU or 3-level memory hierarchy including high bandwidth memory (HBM), DRAM, and non-volatile memory express (NVMe). The deep learning compiler may effectively generate passes agnostic to various targets (e.g., a system or a device) for optimization including overlapping of computation and memory operations, data placement, computation placement, and partitioning. Pseudocode 400 may be pseudocode of a pass determining data placement in a memory hierarchy generated by the deep learning compiler.

In one or more embodiments, the deep learning compiler may implement a pass pipeline to be applied to individual hierarchies. In this case, each of a plurality of passes constituting the pass pipeline may not depend on individual systems and may be constructed to be applicable to hierarchies of all systems.

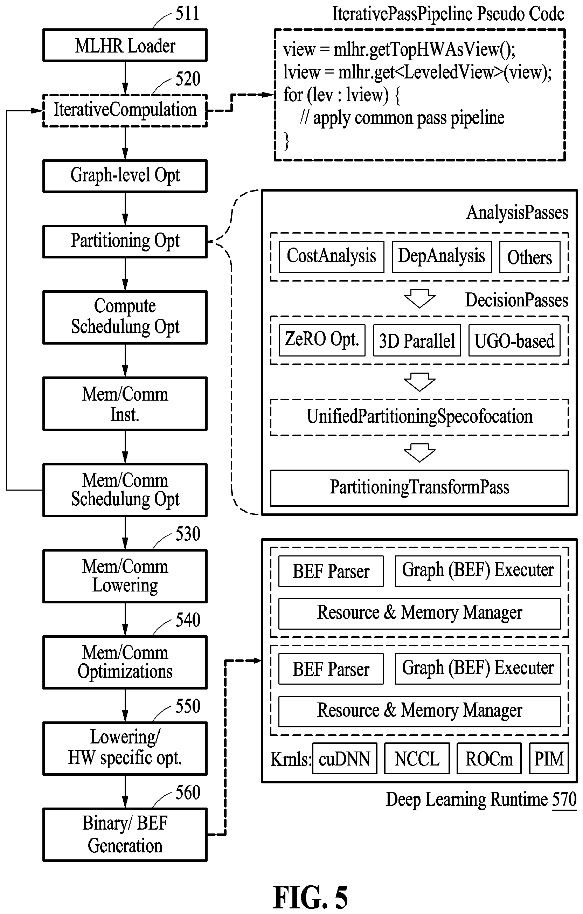

FIG. 5 illustrates an example of operations of a deep learning runtime and a deep learning compiler according to one or more embodiments. While the operations of FIG. 5 may be performed in the shown order and manner, the order of one or more of the operations may be changed, one or more of the operations may be omitted, and/or one or more of the operations may be performed in parallel or simultaneously, without departing from the scope of the shown example.

A deep learning compiler (e.g., the deep learning compiler 210 of FIG. 2 and/or the deep learning compiler 310 of FIG. 3) in an embodiment may perform compilation using an iterative compilation technique on a target system having a hierarchical structure. A core concept of the iterative compilation technique may be the separation of a common pass pipeline, which is applicable to all levels of a system hierarchy, from passes specialized in an individual hierarchy.

In one or more embodiments, in operation 511, the deep learning compiler may load hardware representation on a target system. In addition, the deep learning compiler may extract a plurality of hierarchies from the target system based on the loaded hardware representation.

In operation 520, the deep learning compiler may perform iterative compilation on the plurality of hierarchies. As described in FIG. 4, the deep learning compiler may sequentially perform graph-level optimization, partitioning optimization, computation scheduling optimization, data movement instrumentation, and data movement scheduling optimization on individual hierarchy through passes.

For example, in a GPU cluster that is one hierarchy, data-level parallelism optimization may be applied through passes of partitioning and computation scheduling passes at an inter-node level. While this operation is in progress, the deep learning compiler may not include detailed architecture information on each component in a node, such as types of GPUs included in the GPU cluster, an interconnection scheme, and the number of memory devices. Accordingly, a typical deep learning compiler may not determine a data transmission method between devices and may manage inter-node communication by mapping small computation graphs onto each node. To solve this problem, the deep learning compiler of one or more embodiments may use a data movement dialect as an abstract representation bridging memory and communication dialects. For example, the deep learning compiler of one or more embodiments may represent operations related to memory and communication as an intermediate representation related to data movement. The deep learning compiler may perform optimization using the data movement dialect.

In subsequent iterations, the deep learning compiler may progressively map computation and tensor operations onto specific accelerators and memory devices in each node. As described above, a pass applied to a hierarchy may be configured to be agnostic to a system hierarchy. Accordingly, through the iterative compilation system, a compiler of one or more embodiments may support all system hierarchies at various levels from a single device (e.g., a mobile device, an augmented reality (AR) device, and a virtual reality (VR) device) such as a multi-core NPU to a large-scale cluster (e.g., a multi-node GPU cluster, a data center, and a supercomputer).

In one or more embodiments, in response to iterative compilation being performed, in operation 530, the deep learning compiler may perform lowering on memory or communication. In operation 540, the deep learning compiler may apply system hierarchy-dependent optimization including memory or communication optimization. In operation 550, the deep learning compiler may lower a common dialect to a hardware-specific dialect, such as NPU, GPU, and processing-in-memory (PIM) dialects, to utilize non-reusable hardware-specific optimization. In addition, in operation 550, the deep learning compiler may generate an executable binary or a binary executable format (BEF) file for runtime.

In one or more embodiments, when all optimizations are completed, a deep learning compiler (e.g., the deep learning compiler 210 of FIG. 2 and/or the deep learning compiler 310 of FIG. 3) may generate a target executable binary (e.g., the target executable binary 221 of FIG. 2) and the generated target executable binary may be transmitted to a deep learning runtime 570 (e.g., the deep learning runtime module 230 of FIG. 2). To achieve reusability in the deep learning runtime 570, a core runtime may be separated from a distributed runtime. The core runtime may be responsible for ensuring management and efficient use of a local resource and the distributed runtime may focus on facilitating communication with other servers, and thereby may enable distributed processing and scalability in a system architecture. This modular construction may promote flexibility and adaptability for the placement of deep learning models in various target systems and a distributed environment.

The core runtime may perform a robust function including automatic differentiation, model construction, and GPU acceleration. The function may include enhanced resource management, enhanced memory allocation, and advanced runtime monitoring functions. On the other hand, a component of the distributed runtime may focus on enabling efficient distributed processing of deep learning tasks by promoting communication and coordination between a plurality of servers. Through this modular design, flexible scalability, efficient resource utilization, and smooth integration into a distributed environment may be available.

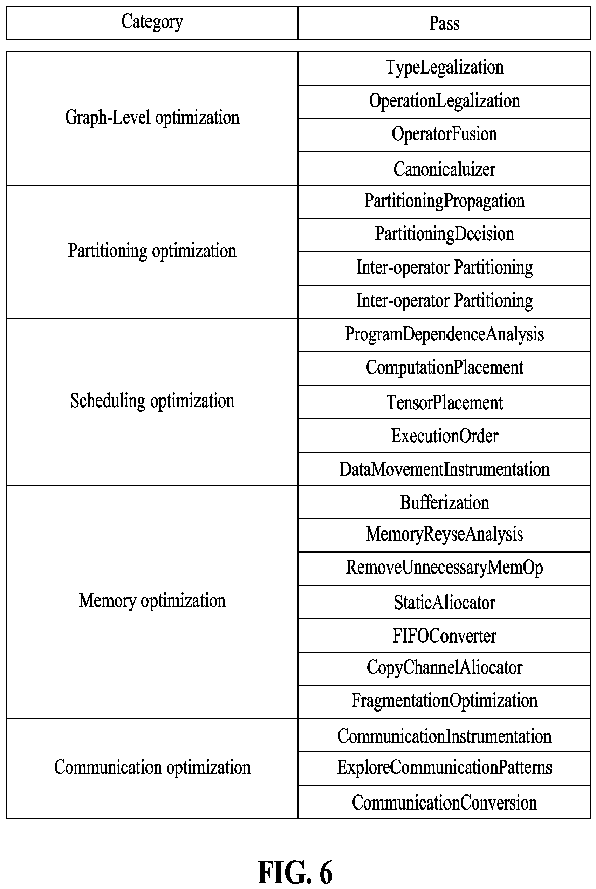

FIG. 6 illustrates a table showing an example of a pass configuring a deep learning optimization field according to one or more embodiments.

As described above, a deep learning optimization field may be divided into five fields, which are a graph field, a partitioning field, a scheduling field, a memory field, and a communication field. Referring to a table 600 of FIG. 6, the graph-level optimization may include, for example, passes of TypeLegalization, Operation Legalization, OperatorFusion, and Canonicalizer. The partitioning optimization may include, for example, passes of Partitioning Propagation, Partitioning Decision, Inter-operator Partitioning, and Intra-operator Partitioning. The scheduling optimization may include, for example, passes of programDependenceAnalysis, Computation Placement, TensorPlacement, ExecutionOrder, and DataMovementlnstrumentation. The memory optimization may include, for example, passes of Bufferization, MemoryReuseAnalysis, RemoveUnnecessaryMemOp, StaticAllocator, FIFOConverter, CopyChannelAllocator, and FragmentationOptimization. The communication optimization may include passes of Communication Instrumentation, ExploreCommunicationPatterns, and CommunicationConversion.

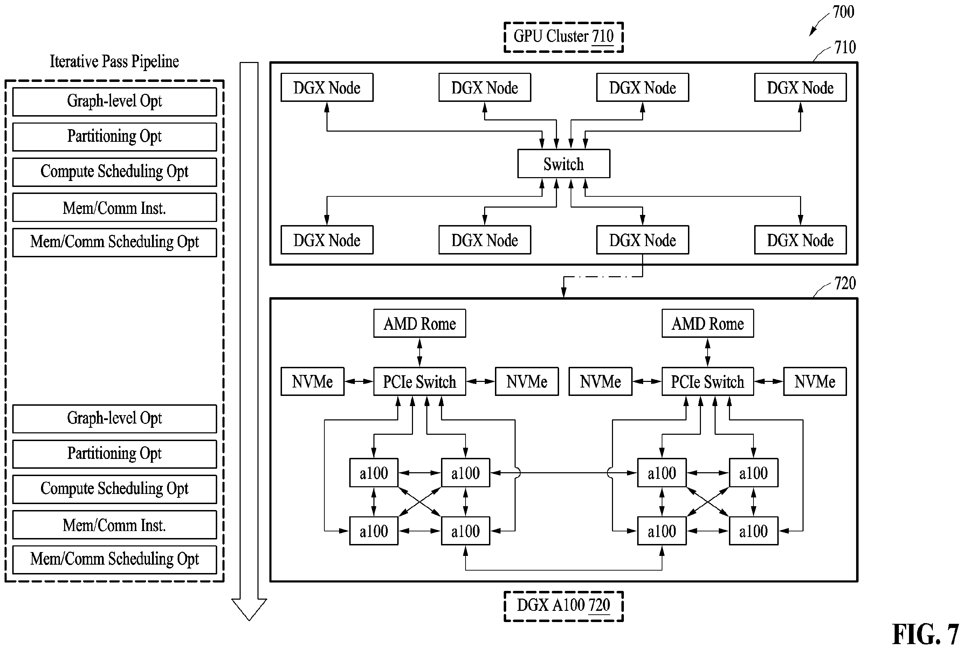

FIG. 7 illustrates an example of a process of a deep learning compiler to perform iterative compilation on a target system according to one or more embodiments.

In one or more embodiments, a deep learning compiler (e.g., the deep learning compiler 210 of FIG. 2 and/or the deep learning compiler 310 of FIG. 3) may receive hardware representation related to a target system 700 and may extract a plurality of hierarchies from the target system 700 based on the hardware representation.

In one or more embodiments, the deep learning compiler may compute the number of hierarchies (e.g., 2 levels) constituting the target system 700 based on the hardware representation. The deep learning compiler may generate a common pass pipeline to be applied to each hierarchy and may iteratively apply the generated common pass pipeline to the plurality of extracted hierarchies as many as the computed number of hierarchies (e.g., 2 levels).

As shown in FIG. 7, the hierarchy of the target system 700 may be 2 levels (e.g., a processor cluster (e.g., a GPU cluster) and an operation system (e.g., a DGX A100)). For example, a processor cluster 710 (e.g., a GPU cluster) that is an upper hierarchy may represent one system in which multiple GPUs are interconnected through a network. As shown in FIG. 7, the GPU cluster 710 may include a switch and 8 DGX nodes connected to the switch. The DGX node may be a high-performance server system optimized to a deep learning task and may include multiple GPUs. An operation system 720 (e.g., a DGXA100) may include 8 a100s. The a100 may be a high-performance server system optimized for a deep learning task and may include a special core referred to as a tensor core.

The deep learning compiler may perform a compilation process by applying a pass pipeline to the GPU cluster 710, which is an upper hierarchy and applying the same pass pipeline to the DGX A100 720, which is a lower hierarchy. The deep learning compiler may generate an executable binary by performing iterative compilation on the plurality of hierarchies. The deep learning compiler may transmit the generated executable binary to the deep learning runtime and the deep learning runtime may execute the executable binary.

FIG. 8 illustrates an electronic device according to one or more embodiments.

Referring to FIG. 8, an electronic device 800 (e.g., an electronic apparatus) includes a processor 801 (e.g., one or more processors), a memory 803 (e.g., one or more memories), and a communication module 805. The electronic device 800 may include an apparatus configured to perform any one, any combination of any two or more of, or all operations described above with reference to FIGS. 1 to 7. For example, the electronic device 800 may include a user device, such as, for example, a smartphone, a personal computer, and a tablet PC, augmented reality (AR) glasses, a sensor, and a server.

In an example, the processor 801 may perform any one of, any combination of any two or more of, or all operations described above with reference to FIGS. 1 to 7. For example, the processor 801 may include any one or any combination of any two or more of the deep learning compiler 210, deep learning runtime module 230, the graph optimizer 240, the performance estimator 250, the deep learning compiler 310, the GPU cluster 710, and the operation system 720.

The memory 803 may be a volatile memory or a nonvolatile memory, and may store data related to methods and operations described above with reference to FIGS. 1 to 7. The memory 803 may include, for example, a random-access memory (RAM), a dynamic RAM (DRAM), a static RAM (SRAM), and/or other types of nonvolatile memory that are known in the related technical field.

The electronic device 800 according to an aspect may connect to an external apparatus, for example, a server (e.g., the server 602 of FIG. 6), through a communication module 805 and may exchange data therethrough.

In an example, the memory 803 may store a program or instructions for which the methods and operations described above with reference to FIGS. 1 to 7 are implemented. The processor 801 may execute the program or instructions stored in the memory 803 and may control the electronic device 800. A code of the program executed by the processor 801 may be stored in the memory 803. For example, the memory 803 may be or include a non-transitory computer-readable storage medium storing instructions that, when executed by the processor 801, configure the processor 801 to perform any one, any combination, or all of operations and methods of FIGS. 1-7.

In an example, the electronic device 800 may further include other components not illustrated herein. For example, the electronic device 800 may further include an input/output (I/O) interface that includes an input device and an output device as a method for interfacing with the communication module 805. As another example, the electronic device 800 may further include other components, such as a transceiver, a variety of sensors, and a database.

The UDLC frameworks, deep learning compilers, deep learning runtime modules, graph optimizers, performance estimators, deep learning compilers, target systems, processor clusters, operation systems, electronic devices, processors, memories, communication modules, UDLC framework 200, deep learning compiler 210, deep learning runtime module 230, graph optimizer 240, performance estimator 250, deep learning compiler 310, target system 700, processor cluster 710, operation system 720, electronic device 800, processor 801, memory 803, communication module 805, and other apparatuses, devices, units, modules, and components disclosed and described herein with respect to FIGS. 1-8 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-8 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is defined by the claims.

## Claims

1. An electronic device comprising:
a deep learning compiler configured to:
receive a hardware representation corresponding to a target system comprising a hierarchical structure;
extract a plurality of hierarchies from the target system based on the received hardware representation; and
perform iterative compilation on the plurality of extracted hierarchies.

2. The electronic device of claim 1, wherein, for the performing of the iterative compilation, the deep learning compiler is configured to sequentially apply a pass pipeline indicating a sequence of passes to each of the plurality of extracted hierarchies from an upper hierarchy to a lower hierarchy.

3. The electronic device of claim 2, wherein, for the performing of iterative compilation, the deep learning compiler is further configured to perform graph-level optimization, partitioning optimization, scheduling optimization, memory optimization, and communication optimization on each of the plurality of extracted hierarchies by applying the pass pipeline to the plurality of extracted hierarchies.

4. The electronic device of claim 2, wherein the pass pipeline comprises a pass of graph-level optimization, a pass of partitioning optimization, a pass of computation scheduling optimization, a pass of memory or communication instrumentation, and a pass of memory or communication scheduling optimization.

5. The electronic device of claim 2, wherein each of the plurality of passes constituting the pass pipeline is configured to be applicable to hierarchies of a plurality of systems, including the target system, without being dependent on an individual system of the plurality of systems.

6. The electronic device of one of claims 1 to 5, wherein, for the performing of the iterative compilation, the deep learning compiler is configured to:
perform optimization on the plurality of extracted hierarchies using a graph dialect, a schedule dialect, a data movement dialect, a memory dialect, and a communication dialect, or
compute a count of hierarchies constituting the target system from the received hardware representation, and iteratively apply a pass pipeline to the plurality of extracted hierarchies by the computed count of hierarchies.

7. The electronic device of one of claim 1 to 6, further comprising one or more processors comprising the deep learning compiler.

8. A processor-implemented method, the method comprising:
receiving a hardware representation corresponding to a target system comprising a hierarchical structure;
extracting a plurality of hierarchies from the target system based on the received hardware representation; and
performing iterative compilation on the plurality of extracted hierarchies.

9. The method of claim 8, wherein the performing of the iterative compilation comprises sequentially applying a pass pipeline indicating a sequence of passes to each of the plurality of extracted hierarchies from an upper hierarchy to a lower hierarchy.

10. The method of claim 9, wherein the performing of iterative compilation comprises performing graph-level optimization, partitioning optimization, scheduling optimization, memory optimization, and communication optimization on each of the plurality of extracted hierarchies by applying the pass pipeline to the plurality of extracted hierarchies.

11. The method of claim 9, wherein the pass pipeline comprises a pass of graph-level optimization, a pass of partitioning optimization, a pass of computation scheduling optimization, a pass of memory or communication instrumentation, and a pass of memory or communication scheduling optimization.

12. The method of claim 9, wherein each of the plurality of passes constituting the pass pipeline is configured to be applicable to hierarchies of a plurality of systems, including the target system, without being dependent on an individual system of the plurality of systems.

13. The method of one of claims 8 to 13, wherein the performing of the iterative compilation comprises performing optimization on the plurality of extracted hierarchies using a graph dialect, a schedule dialect, a data movement dialect, a memory dialect, and a communication dialect, or
wherein the performing of the iterative compilation comprises computing a count of hierarchies constituting the target system from the received hardware representation, and iteratively applying a pass pipeline to the plurality of extracted hierarchies by the computed count of hierarchies.

14. A non-transitory computer-readable storage medium storing instructions that, when executed by one or more processors, configure the one or more processors to:
receive a hardware representation corresponding to a target system comprising a hierarchical structure;
extract a plurality of hierarchies from the target system based on the received hardware representation; and
perform iterative compilation on the plurality of extracted hierarchies by applying a same pass pipeline to each of the plurality of hierarchies.

15. The computer-readable storage medium of claim 14, wherein the plurality of extracted hierarchies comprises:
an upper hierarchy comprising a plurality of nodes of the target system; and
a lower hierarchy comprising components of a node of the plurality of nodes,
wherein, for the performing of the iterative compilation, the one or more processors are configured to:
apply the same pass pipeline to the upper hierarchy by mapping information onto the node, without using information of an internal configuration of the node; and
apply the same pass pipeline to the lower hierarchy by mapping the information mapped onto the node onto the components of the node, based on the information of the internal configuration of the node, and
wherein the information mapped onto the node comprises an operation mapped onto the node and data of a deep learning model mapped onto the node.
